# EUROPEAN PATENT APPLICATION

(11) **EP 1 548 997 A1**
(43) Date of publication of application: **29.06.2005**
(21) Application number: 03748584.4
(22) Date of filing: 25.09.2003
(51) Int. Cl.: H04L 12/56, H04M 11/00, H04N 7/16, H04H 1/00

(54) **SATELLITE DIGITAL BROADCAST RECEIVING DEVICE**

(30) Priority: 25.09.2002 JP 2002279300
(71) Applicant: MATSUSHITA ELECTRIC INDUSTRIAL CO., LTD., Kadoma-shi, Osaka 571-8501 (JP)
(72) Inventor: NISHIKAWA, Yoshikane, Neyagawa-shi, Osaka 572-0837 (JP)
(74) Representative: Eisenführ, Speiser & Partner
(86) International application number: PCT/JP2003/012243
(87) International publication number: WO 2004/030291

(57) **Abstract**

A satellite digital broadcasting receiver apparatus is provided which includes a communication circuit that transmits and receives apparatus management information and apparatus control information required for viewing a satellite digital broadcasting program to and from a management center apparatus for managing the apparatus management information and the apparatus control information is provided. A VoIP interface circuit of the communication circuit is connected to an IP (Internet Protocol) network, transmits data including the apparatus management information to the management center apparatus via the IP network and an access point communication apparatus using a VoIP (Voice over Internet Protocol) packet signal, and receives data including the apparatus control information from the management center apparatus via the access point communication apparatus and the IP network using the VoIP packet signal.

## Description

### TECHNICAL FIELD

The present invention relates to a satellite digital broadcasting receiver apparatus that includes communication means for transmission and receive of apparatus management information and apparatus control information required for viewing a pay program in satellite digital broadcasting to and from a management center apparatus for managing the apparatus management information and the apparatus control information.

### BACKGROUND ART

In recent years, in order to view a pay program in satellite digital broadcasting, it is necessary for a satellite digital broadcasting receiver apparatus to include a function of uploading apparatus management information such as viewing history information for pay broadcasting recorded and stored in an IC card inserted into an IC card interface circuit included in the satellite digital broadcasting apparatus to a management center apparatus provided in a viewing information collecting center for managing these pieces of information, and a function of downloading apparatus control information such as a next uploading date and a pay broadcasting viewing expiration date from the management center apparatus.

A communication sequence, a data format, and the like for a communication between the satellite digital broadcasting receiver apparatus and the management center apparatus when the satellite digital broadcasting receiver apparatus employed in Japan uploads the apparatus management information or downloads the apparatus control information are prescribed in a prior art document of "Conditional Access System Specifications for Digital Broadcasting Standard", ARIB STD-B25 Version 3.0, May 2001, Association of Radio Industries and Businesses (ARIB). Further, "a television receiver" related to the present standard is disclosed in the Japanese Patent Laid-Open Publication No. 10-174079-A. "A pay communication method for digital broadcasting" related to the present standard is disclosed in the Japanese Patent Laid-Open Publication No. 11-187376-A.

In the standard as specified in the prior art document, a public switched telephone network is used to connect the satellite digital broadcasting receiver apparatus to the management center apparatus. Recently, IP networks such as IP telephone lines, whose telephone rate is less expensive than that of a conventional public switched telephone network, have gradually spread. The conventional technique has such a problem that the IP network cannot be used.

It is a first object of the present invention to provide a satellite digital broadcasting receiver apparatus capable of using an IP network for connection of the satellite digital broadcasting receiver to a management center apparatus.

It is a second object of the present invention to provide a satellite digital broadcasting receiver apparatus capable of automatically communicating and connecting with a management center apparatus using an IP network for connection of the satellite digital broadcasting receiver apparatus with the management center apparatus.

It is a third object of the present invention to provide a satellite digital broadcasting receiver apparatus capable of ensuring transmission and receive of apparatus management information and apparatus control information to and from a management center apparatus using an IP network for connection of the satellite digital broadcasting receiver apparatus with the management center apparatus.

It is a fourth object of the present invention to provide a VoIP adapter apparatus capable of easily using an IP network for connection of the satellite digital broadcasting receiver apparatus with a management center apparatus using an existing satellite digital broadcasting receiver apparatus.

### DISCLOSURE OF THE INVENTION

According to the first aspect of the present invention, there is provided a satellite digital broadcasting receiver apparatus including a communication circuit for transmission and receive of apparatus management information and apparatus control information required for viewing a satellite digital broadcasting program to and from a management center apparatus for managing the apparatus management information and the apparatus control information. In the satellite digital broadcasting receiver apparatus, the communication circuit includes a VoIP interface circuit connected to an IP (Internet Protocol) network. The VoIP interface circuit transmits data including the apparatus management information to the management center apparatus via the IP network and an access point communication apparatus using a VoIP (Voice over Internet Protocol) packet signal, and receives data including the apparatus control information from the management center apparatus via the access point communication apparatus and the IP network using the VoIP packet signal.

In the above-mentioned satellite digital broadcasting receiver apparatus, the VoIP interface circuit transmits the data including the apparatus management information to the management center apparatus via the IP network, the gateway apparatus, the public switched telephone network, and the access point communication apparatus, and the VoIP interface circuit receives the data including the apparatus control information from the management center apparatus via the access point communication apparatus, the public switched telephone network, the gateway apparatus, and the IP network.

Further, in the above-mentioned satellite digital broadcasting receiver apparatus, the VoIP packet signal is constituted so that an IP header, a UDP header, and an RTP header are added to data of the apparatus management information or the apparatus control information.

Furthermore, the above-mentioned satellite digital broadcasting receiver apparatus further includes a storage device that stores a telephone number of the access point communication apparatus, and control means for generating an address of the gateway apparatus from the telephone number. In the satellite digital broadcasting receiver apparatus, the VoIP interface circuit transmits the VoIP packet signal that includes the data including the apparatus management information to the gateway apparatus via the IP network using the generated address as a destination address. Alternatively, the above-mentioned satellite digital broadcasting receiver apparatus further includes a storage device that stores a telephone number of the access point communication apparatus, and control means for transmitting an inquiry signal including the telephone number to a predetermined server apparatus, and for receiving an address of the gateway apparatus transmitted in response to the inquiry signal. In the satellite digital broadcasting receiver, apparatus, the VoIP interface circuit transmits the VoIP packet signal that includes the data including the apparatus management information to the gateway apparatus via the IP network using the received address as a destination address.

Furthermore, in the above-mentioned satellite digital broadcasting receiver apparatus, the VoIP interface circuit divides the data including the apparatus management information to a plurality of VoIP packets, transmits the plurality of VoIP packets, and transmits a next VoIP packet signal in response to an acknowledgment signal from the management center apparatus.

According to the second aspect of the present invention, there is provided a VoIP adapter apparatus for use in a satellite digital broadcasting receiver apparatus including a communication circuit for transmission and receive of apparatus management information and apparatus control information required for viewing a satellite digital broadcasting program to and from a management center apparatus for managing the apparatus management information and the apparatus control information. The VoIP adapter apparatus includes a telephone modem connected to the communication circuit, and a VoIP interface circuit connected to the telephone modem and an IP (Internet Protocol) network. The VoIP interface circuit transmits data, that includes the apparatus management information and that is received from the communication circuit via the telephone modem to the management center apparatus via the IP network and an access point communication apparatus using a VoIP (Voice over Internet Protocol) packet signal, and receives data including the apparatus control information from the management center apparatus via the access point communication apparatus and the IP network using the VoIP packet signal and outputs the data to the communication circuit via the telephone modem.

In the above-mentioned VoIP adapter apparatus, the VoIP interface circuit transmits the data including the apparatus management information to the management center apparatus via the IP network, a gateway apparatus, a public switched telephone network, and the access point communication apparatus, and the VoIP interface circuit receives the data including the apparatus control information from the management center apparatus via the access point communication apparatus, the public switched telephone network, the gateway apparatus, and the IP network.

Further, in the above-mentioned VoIP adapter apparatus, the VoIP packet signal is constituted so that an IP header, a UDP header, and an RTP header are added to data of the apparatus management information or the apparatus control information.

### BRIEF DESCRIPTION OF THE DRAWINGS

Fig. 1 is a bock diagram showing a configuration of a communication system between a satellite digital broadcasting receiver apparatus 100 according to a first preferred embodiment of the present invention and a management center 80.
Fig. 2 is a block diagram showing a detailed configuration of the satellite digital broadcasting receiver apparatus 100 shown in Fig. 1.
Fig. 3 is a block diagram showing a detailed configuration of a call control server apparatus 30 shown in Fig. 1.
Fig. 4 is a block diagram showing a detailed configuration of a gateway apparatus 40.
Fig. 5 shows one example of a management table stored in the management table memory 32 shown in Fig. 3.
Fig. 6 is a sequence diagram showing a communication sequence executed between the satellite digital broadcasting receiver apparatus 100 and the call control server apparatus 30 in the communication system shown in Fig. 1, for obtaining a destination URL of the gateway apparatus 40.
Fig. 7 shows a signal format when apparatus management information (AMI) is transmitted from the satellite digital broadcasting receiver apparatus 100 to the gateway apparatus 40 in the communication system shown in Fig. 1.
Fig. 8 is a sequence diagram showing a communication sequence showing a communication between the satellite digital broadcasting receiver apparatus 100 and the management center apparatus 80 in the communication system shown in Fig. 1.
Fig. 9 is a sequence diagram showing a communication sequence for uploading the apparatus management information in the communication sequence shown in Fig. 8.
Fig. 10 shows a conversion method for converting a telephone number of an access point communication apparatus 70 for connecting the satellite digital broadcasting receiver apparatus 100 to the management center apparatus 80 into an IP address of the gateway apparatus 40, according to a first modified preferred embodiment of the first preferred embodiment.

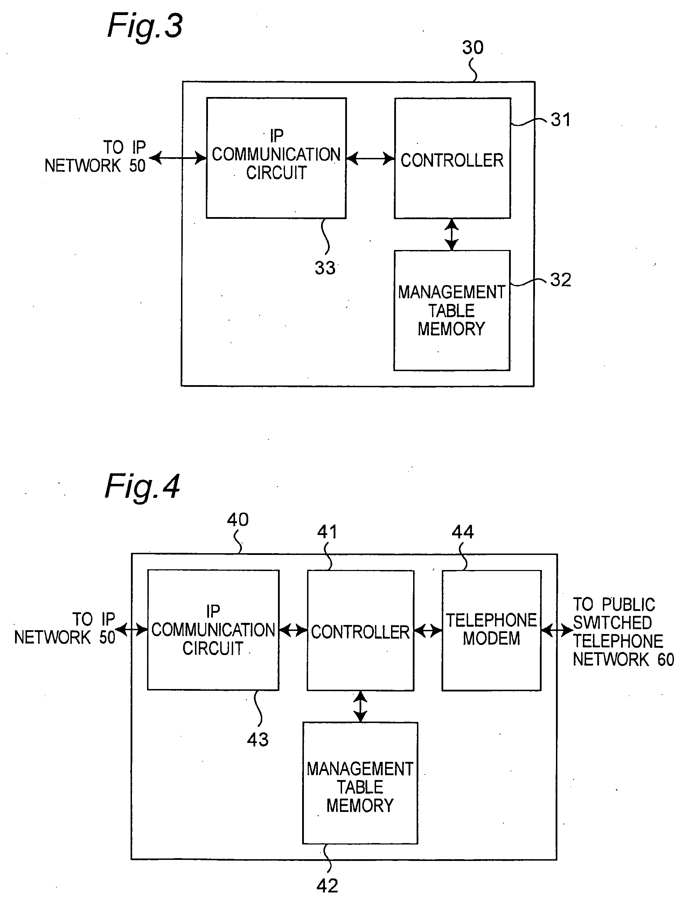

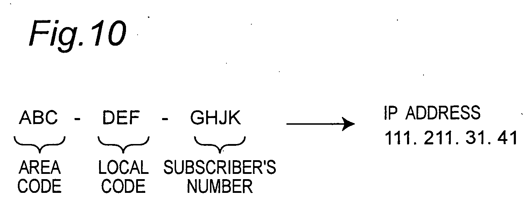

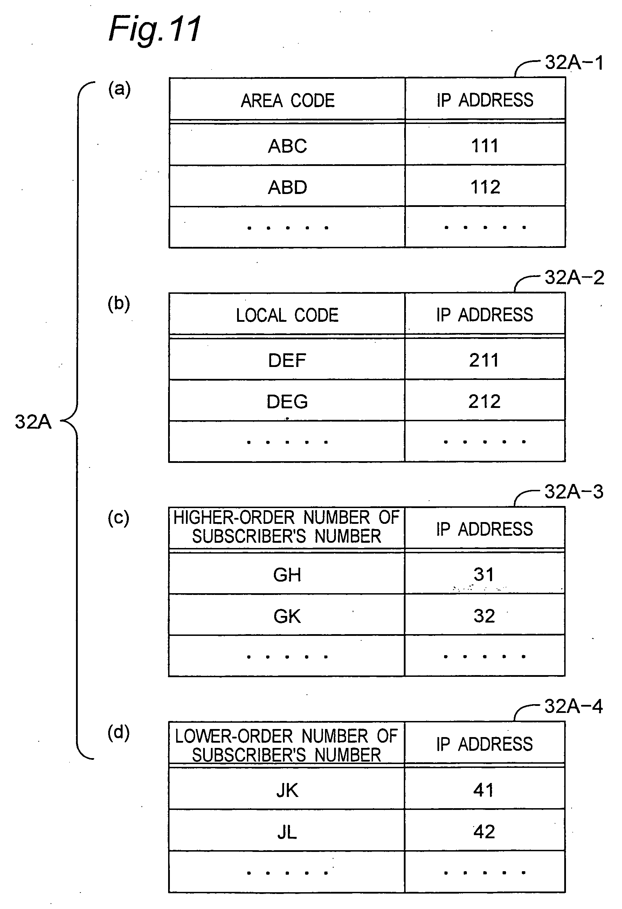

Fig. 11 shows examples of IP address conversion tables 32A stored in, for example, the management table memory 32 of the call control server apparatus 30 shown in Fig. 3 and using the conversion method shown in Fig. 10, wherein Fig. 11(a) shows one example of an area code-to-IP address conversion table 32A-1, Fig. 11(b) shows one example of a local code-to-IP address conversion table 32A-2, Fig. 11(c) shows one example of a higher-order number of subscriber's number-to-IP address conversion table 32A-3, and Fig. 11(d) shows one example of a lower-order number of subscriber's number-to-IP address conversion table 32A-4.
Fig. 12 shows a conversion method for converting the telephone number of the access point communication apparatus 70 for connecting the satellite digital broadcasting receiver apparatus 100 to the management center apparatus 80 into the URL of the gateway apparatus 40, according to a second modified preferred embodiment of the first preferred embodiment.
Fig. 13 shows a conversion method for converting the telephone number of the access point communication apparatus 70 for connecting the satellite digital broadcasting receiver apparatus 100 to the management center apparatus 80 into a URL of the gateway apparatus 40, according to a third modified preferred embodiment of the first preferred embodiment.
Fig. 14 shows examples of IP address conversion tables 32B stored in, for example, the management table memory 32 of the call control server apparatus 30 shown in Fig. 3 and using the conversion method shown in Fig. 13, wherein Fig. 14(a) shows one example of an area code-to-IP address conversion table 32B-1, Fig. 14(b) shows one example of a local code-to-IP address conversion table 32B-2, and Fig. 14(c) shows one example of a subscriber's number-to-IP address conversion table 32B-3.
Fig. 15 is a block diagram showing a configuration of a communication system between a satellite digital broadcasting receiver apparatus 100A according to a second preferred embodiment of the present invention and a management center 80.
Fig. 16 is a block diagram showing a detailed configuration of the satellite digital broadcasting receiver apparatus 100A shown in Fig. 15.
Fig. 17 is a sequence diagram showing a communication sequence showing a communication between the satellite digital broadcasting receiver apparatus 100A and the management center apparatus 80 in the communication system shown in Fig. 15.
Fig. 18 is a block diagram showing a configuration of a communication system between a satellite digital broadcasting receiver apparatus 100 according to a third preferred embodiment of the present invention and a management center apparatus 80.
Fig. 19 is a block diagram showing a configuration of a communication system between a satellite digital broadcasting receiver apparatus 100A according to a third preferred embodiment of the present invention and a management center apparatus 80.

### BEST MODE FOR CARRYING OUT THE INVENTION

### FIRST PREFERRED EMBODIMENT

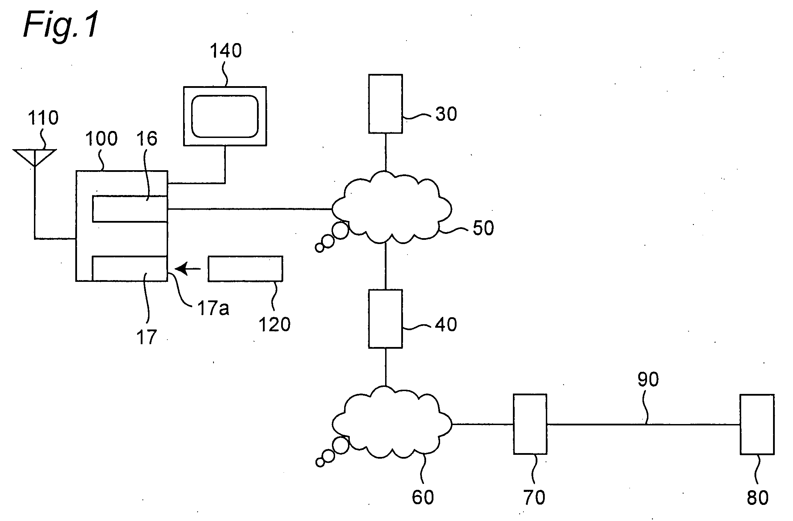

Fig. 1 is a bock diagram showing a configuration of a communication system between a satellite digital broadcasting receiver apparatus 100 according to a first preferred embodiment of the present invention and a management center apparatus 80. The satellite digital broadcasting receiver apparatus 100 according to the first preferred embodiment is provided for receiving a broadcast signal for satellite digital broadcasting using, for example, a satellite receiving antenna 110 such as a parabola antenna, and for outputting a video signal and an audio signal of the broadcast signal to a television receiver 140. The satellite digital broadcasting receiver apparatus 100 is characterized by including a function of uploading apparatus management information such as viewing history information for pay broadcasting recorded and stored in an IC card 120 inserted into a card slot 17a of an IC card interface circuit 17 included in the satellite digital broadcasting receiver apparatus 100 to a management center apparatus 80 provided in a viewing information collecting center that manages these pieces of information, and a function of downloading apparatus control information such as a next uploading date and a pay broadcasting viewing expiration date from the management center apparatus 80. The satellite digital broadcasting receiver apparatus 100 is characterized by particularly including a VoIP (Voice over Internet Protocol) interface circuit 16 that transmits and receives data including the apparatus management information and the apparatus control information to and from the management center apparatus 80 via an IP network 50 using a VoIP (Voice over Internet Protocol) packet signal.

Referring to Fig. 1, the VoIP interface circuit 16 of the satellite digital broadcasting receiver apparatus 100 is connected to a gateway apparatus 40 via an IP network 50 that includes a call control server apparatus 30 for executing a VoIP communication with a communication terminal apparatus using a call control protocol such as SIP (Session Initiation Protocol) or ITU-T Recommendation H.323. The gateway apparatus 40 is a gateway communication control apparatus that executes conversion of the communication protocol between the IP network 50 and the public switched telephone network 60. The gateway apparatus 40 is connected to the management center apparatus 80 via the public switched telephone network 60, an access point communication apparatus 70, and a communication line 90 of an individual collection network.

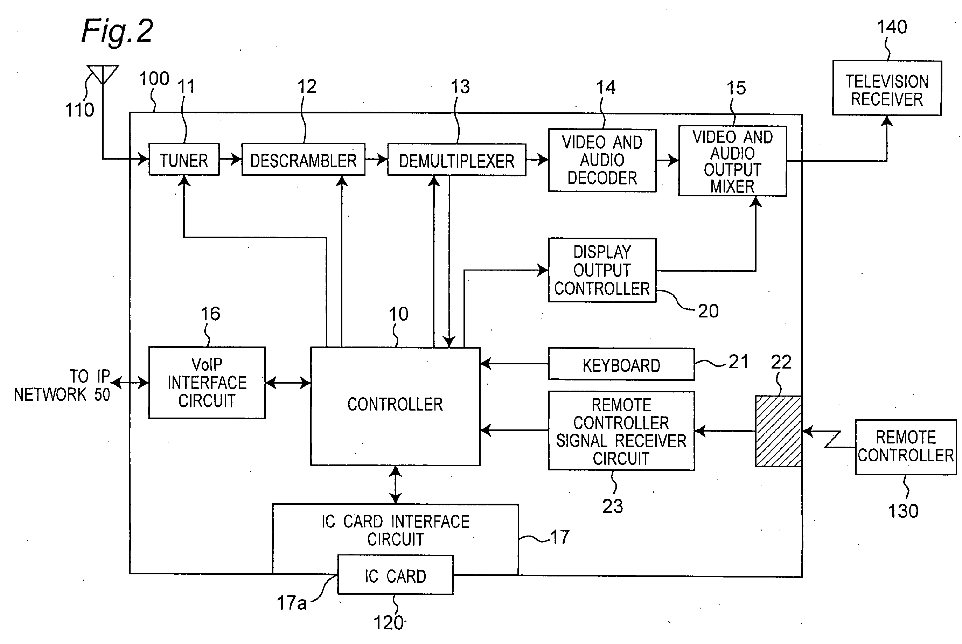

Fig. 2 is a block diagram showing a detailed configuration of the satellite digital broadcasting receiver apparatus 100 shown in Fig. 1.

Referring to Fig. 2, the broadcast signal for satellite digital broadcasting received using the satellite receiving antenna 110 is inputted to a tuner 11. The tuner 11 executes signal processings such as a low noise high frequency amplification, a low frequency conversion, an intermediate amplification, and a digital demodulation, on the inputted broadcast signal, and outputs the processed baseband signal to a descrambler 12. The descrambler 12 executes a descrambler processing to the input baseband signal based on a control signal from a controller 10, generates a descrambled baseband signal, and outputs the descrambled baseband signal to a demultiplexer 13. The demultiplexer 13 executes a multiplexing and separation processing to the inputted baseband signal, thereby separating broadcast program signals on a plurality of channels from various data signals (including identification data and individual data). In addition, the demultiplexer 13 outputs the latter data signals to the controller 10, and outputs a broadcast program signal selected from among the former plurality of channel broadcast program signals based on a selection signal from the controller 10 to a video and audio decoder 14. The video and audio decoder 14 decodes the inputted broadcast program signal to a video signal and an audio signal, and outputs the video signal and the audio signal to the television receiver 140 via a video and audio output mixer 15. Further, a display output controller 20 generates a video signal including display information from the controller 10 based on the display information, controls the video and audio output mixer 15 to superimpose the generated video signal on the video signal of the broadcast program signal and output the resultant video signal.

A keyboard (not shown) is connected to a keyboard interface circuit 21. The keyboard interface circuit 21 converts control indication information on the satellite digital broadcasting receiver apparatus 100 inputted by users using the keyboard for inputting the control indication information, into a predetermined digital signal, and outputs the digital signal to the controller 10. A remote controller 130 is, for example, an input apparatus for remote control indication information using an infrared signal. The remote controller 130 converts the control indication information inputted by user's using the remote controller 130 into a predetermined digital infrared signal, and radiates the digital infrared signal toward an infrared signal light receiving section 22. The infrared signal light receiving section 22 receives the infrared signal from the remote controller 130, converts the infrared signal into an electric signal, and outputs the electric signal to a remote controller signal receiver circuit 23. The remote controller signal receiver circuit 23 decodes the inputted electric signal, extracts data of the control indication information, and outputs the extracted data to the controller 10. In response to this, the controller 10 controls the respective constituent sections in the satellite digital broadcasting receiver apparatus 100 based on the data of the control indication information.

The IC card interface circuit 17 includes the card slot 17a for inserting the IC card 120. The IC card 120 is a memory card that records and stores information required for viewing a pay broadcasting program for satellite digital broadcasting. The IC card 120 stores the apparatus management information such as information on a telephone number of the access point communication apparatus 70 for connecting the apparatus 100 to the management center apparatus 80 (where the telephone number information is stored in the IC card 120 in the viewing information collection center for a user of the satellite digital broadcasting receiver apparatus 100), and viewing history information on pay broadcasting programs viewed by the user using the satellite digital broadcasting receiver apparatus 100. The apparatus management information is uploaded to the management center apparatus 80 in the viewing information collection center that manages the apparatus management information via the VoIP interface circuit 16 and the IP network 50 as will be described later in detail. In addition, the apparatus control information such as the next uploading date and the pay broadcasting program viewing expiration date transmitted from the management center apparatus 80 via the IP network 50 and the VoIP interface circuit 16 is downloaded to the satellite digital broadcasting receiver apparatus 100, and then, it is stored in the IC card 120 via the IC card interface circuit 17. It is noted that the VoIP interface circuit 16 operates under control of the controller 10, and is provided to transmit and receive the apparatus management information and the apparatus control information to and from the management center apparatus 80 via the IP network 50 using the VoIP packet signal.

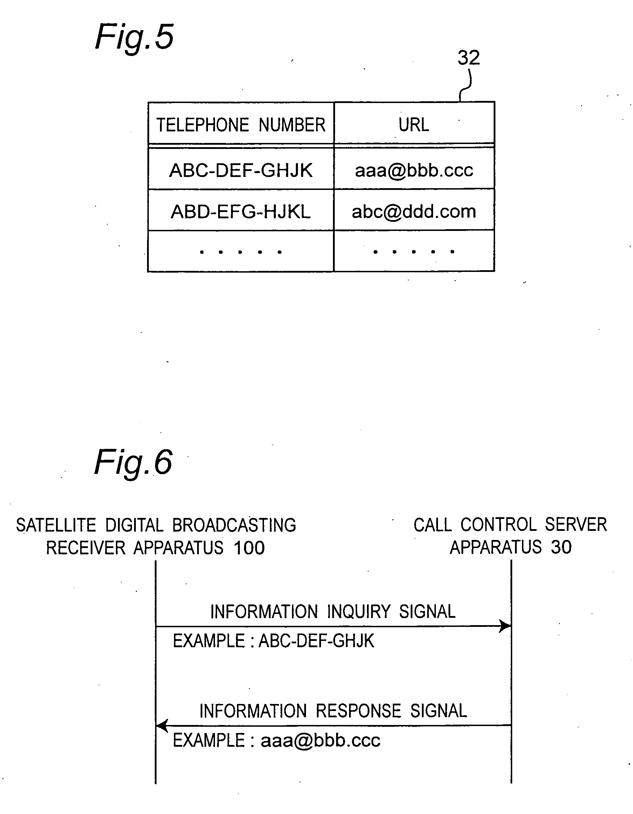

Fig. 3 is a block diagram showing a detailed configuration of the call control server apparatus 30 shown in Fig. 1. Referring to Fig. 3, the call control server apparatus 30 is constituted so as to include a controller 31 that controls entirety of the call control server apparatus 30, a management table memory 32 that stores at least a management table 32, as shown in, for example, Fig. 5, for converting the telephone number of the access point communication apparatus 70 into a URL (Uniform Resource Locators) of the gateway apparatus 70, and an IP communication circuit 33 that holds IP communications with the VoIP interface circuit 16 of the satellite digital broadcasting receiver apparatus 100 and the gateway apparatus 40 via the IP network 50 using an internet protocol, for example, SIP communication procedures or ITU-T Recommendation H.323.

Fig. 4 is a block diagram showing a detailed configuration of the gateway apparatus 40. Referring to Fig. 4, the gateway apparatus 40 is constituted so as to includes a controller 41 that controls entirety of the gateway apparatus 40, a management table memory 42 that stores, for example, the telephone number of the access point communication apparatus 70, an IP communication circuit 33 that holds an IP communication with the VoIP interface circuit 16 of the satellite digital broadcasting receiver apparatus 100 via the IP network 50 using an Internet protocol, and a telephone modem 44 that holds a data communication with a telephone modem of the access point communication apparatus 70 via the public switched telephone network 60. The controller 41 of the gateway apparatus 40 relays various digital signals communicated between the satellite digital broadcasting receiver apparatus 100 and the management center apparatus 80 while executing a conversion processing to a communication signal and communication procedures for the communication between the IP network 50 and the public switched telephone network 60.

Fig. 5 shows one example of the management table stored in the management table memory 32 shown in Fig. 3. As shown in Fig. 5, the management table is a management table for converting the telephone number of the access point communication apparatus 70 for connecting the satellite digital broadcasting receiver apparatus 100 with the management center apparatus 80 into the URL of the gateway apparatus 40. The management table stores the URL for each telephone number.

Fig. 6 is a sequence diagram showing a communication sequence executed between the satellite digital broadcasting receiver apparatus 100 and the call control server apparatus 30 in the communication system shown in Fig. 1, for obtaining a destination URL of the gateway apparatus 40. As shown in Fig. 6, the controller 10 of the satellite digital broadcasting receiver apparatus 100 transmits an information inquiry signal including the telephone number of the access point communication apparatus 70 (where the telephone number is stored in the IC card 120 in advance) for connecting the satellite digital broadcasting receiver apparatus 100 to the management center apparatus 80 to, for example, the call control server apparatus 30 (which may be replaced by a predetermined server apparatus connected to the IP network 50) via the IP network 50 using the VoIP interface circuit 16 through communication procedures according to the Internet protocol. In response to this, the call control server apparatus 30 transmits information response signal including the URL that corresponds to the received telephone number, to the satellite digital broadcasting receiver apparatus 100 via the IP network 50 while referring to the management table 31A in the management table memory 31. Through these communication procedures, the controller 10 of the satellite digital broadcasting receiver apparatus 100 can acquire information on the URL of the gateway apparatus 40 corresponding to the telephone number of the access point communication apparatus 70 for connecting the satellite digital broadcasting receiver apparatus 100 to the management center apparatus 80.

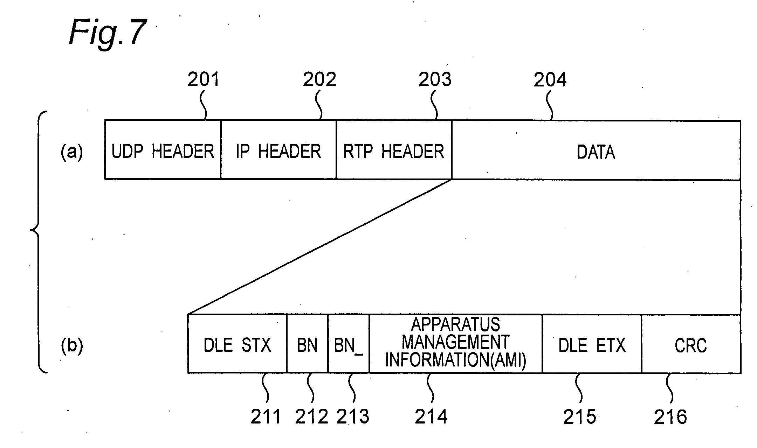

Fig. 7 shows a signal format of the packet signal used when the apparatus management information (AMI) is transmitted from the satellite digital broadcasting receiver apparatus 100 to the gateway apparatus 40 in the communication system shown in Fig. 1. In Fig. 7, Fig. 7(a) is an overall signal format of the packet signal, and Fig. 7(b) is a detailed format of data 204 in the packet signal. As shown in Fig. 7(a), an RTP (Real time Transport Protocol) header 203, an IP (Internet Protocol) header 202, and a UDP (User Datagram Protocol) header 201 is allocated in front of the data 204. The headers 201, 202, and 203 shown in Fig. 7(a) are removed when the communication via the IP network 50 is terminated by the gateway apparatus 40, and only the data 204 shown in Fig. 7(b) is transmitted in a section from the gateway apparatus 40 to the management center 80.

As for the signal format of the data 204 shown in Fig. 7(b), when the apparatus management information is uploaded from the satellite digital broadcasting receiver apparatus 100 to the management center apparatus 80 using the VoIP packet signal, pieces of data 211, 212, 213, 215, and 216 to be transmitted to the management center apparatus 80 are added to the apparatus management information (AMI) 214 read out by the controller 10 from the IC card 120. As for the added data 211, 212, 213, 215, and 216, data of "1002H" that indicates a start of data is stored in "DLE STX" of data 211, data of block serial numbers of the apparatus management information starting at 0D up to 255D incremented one by one per packet is stored in "BN" of the data 212, and data of a complement for 1 of data of "BN" is stored in "BN_" of the data 213. Further, data (of a maximum of 2048 bytes) read out from the IC card 120 is stored in the apparatus management information (AMI) data 214, data of 1003H that indicates an end of the data is stored in "DLE ETX" of the data 215, and data (of two bytes) on a cyclic redundancy check code calculated for the apparatus management information (AMI) data 214 is stored in "CRC" of the data 216.

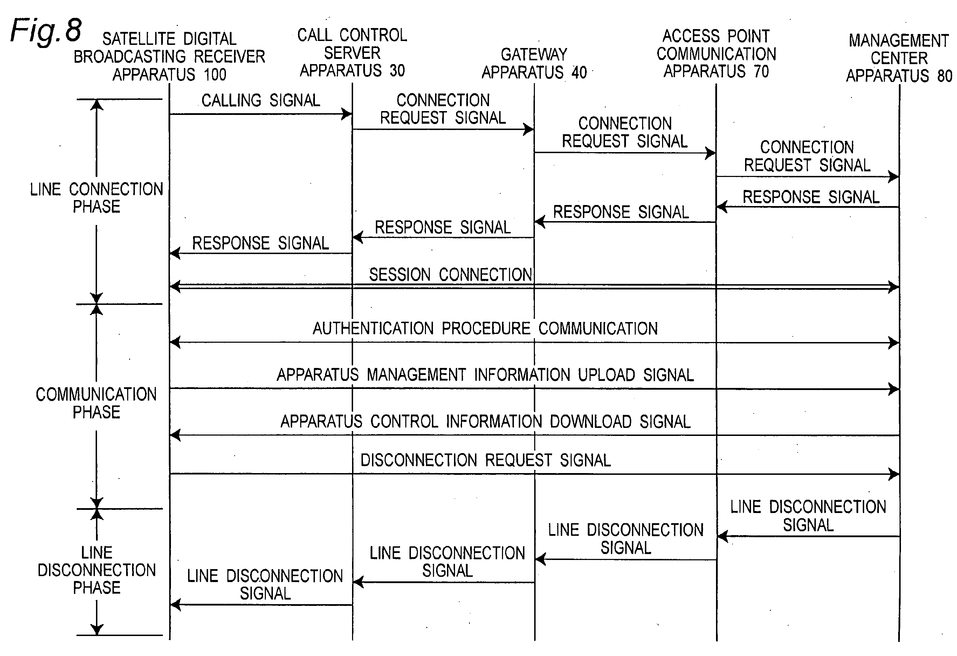

Fig. 8 is a sequence diagram showing a communication sequence showing a communication between the satellite digital broadcasting receiver apparatus 100 and the management center apparatus 80 in the communication system shown in Fig. 1. The communication is executed by transmission and receiving of the packet signal using the VoIP packet signal through VoIP communication procedures on the IP network 50 from the satellite digital broadcasting receiver apparatus 100 to the gateway apparatus 40 via the call control server apparatus 30. The communication is executed using individual communication procedures and an individual signal format prescribed in the standard as described in the above-cited prior art document via the public switched telephone network 60, from the gateway apparatus 40 to the management center apparatus 80 via the public switched telephone network 60, the access point communication apparatus 70, and the communication line 90 for the individual collection network.

Referring to Fig. 8, after acquiring the URL of the gateway apparatus 40 in response to the information inquiry shown in Fig. 6, the satellite digital broadcasting receiver apparatus 100 transmits a calling signal including the URL to the call control server apparatus 30 in a line connection phase. In response to this, the call control server apparatus 30 transmits a connection request signal to the gateway apparatus 40, and the gateway apparatus 40 transmits the connection request signal to the management center apparatus 80 via the access point communication apparatus 70. In response to this, the management center apparatus 80 transmits a response signal to the gateway apparatus 40 via the access point communication apparatus 70 if the apparatus 80 can respond to the connection request. Further, the gateway apparatus 40 transmits the response signal to the call control server apparatus 30. In response to this, the call control server apparatus 30 transmits the response signal to the satellite digital broadcasting receiver apparatus 100. A communication session connection is thus established between the satellite digital broadcasting receiver apparatus 100 and the management center apparatus 80.

Next, in a communication phase, after an authentication procedure communication is executed between the satellite digital broadcasting receiver apparatus 100 and the management center apparatus 80, an upload signal including the apparatus management information is transmitted from the satellite digital broadcasting receiver apparatus 100 to the management center apparatus 80. In response to this, a download signal including the apparatus control information is transmitted from the management center apparatus 80 to the satellite digital broadcasting receiver apparatus 100, and the apparatus control information is stored in the IC card 120. The satellite digital broadcasting receiver apparatus 100 then transmits a disconnection request signal to the management center apparatus 80. In response to this, a line disconnection phase starts, and in the line disconnection phase, the management center apparatus 80 transmits a line disconnection signal to the satellite digital broadcasting receiver apparatus 100 via the access point communication apparatus 70, the gateway apparatus 40, and the call control server apparatus 30, thereby disconnecting the line connection.

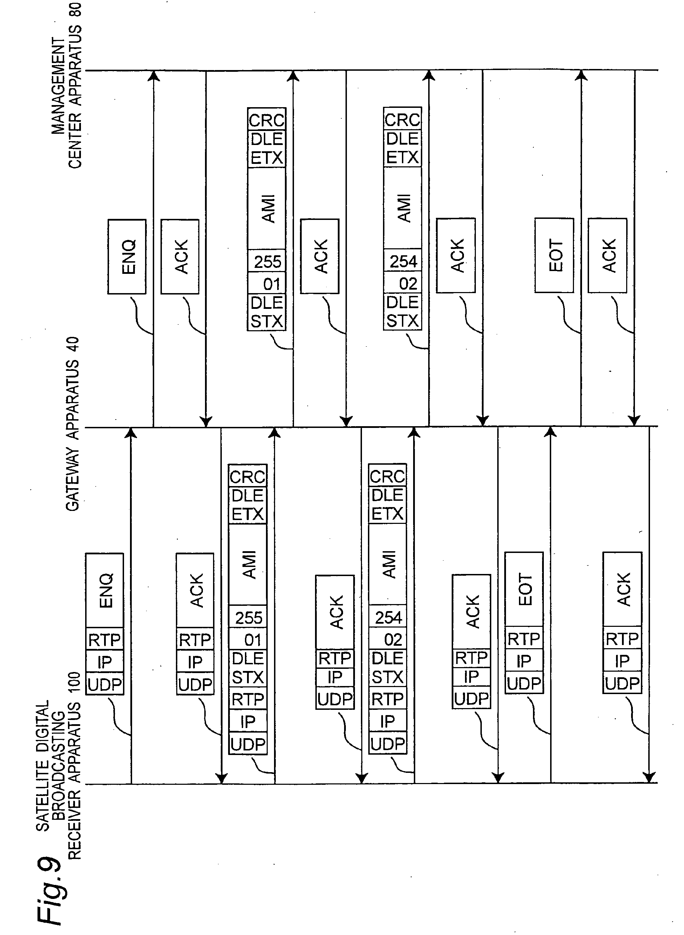

Fig. 9 is a sequence diagram showing a communication sequence for uploading the apparatus management information (AMI) in the communication sequence shown in Fig. 8.

Referring to Fig. 9, data of "05H" is stored in the inquiry signal (ENQ), and the inquiry signal (ENQ) is transmitted first to the management center apparatus 80 from the satellite digital broadcasting receiver apparatus 100 via the gateway apparatus 40. In response to this, the management center apparatus 80 transmits an acknowledgement signal (ACK) to the satellite digital broadcasting receiver apparatus 100 via the gateway apparatus 40. Next, the apparatus management information (AMI) is transmitted from the satellite digital broadcasting receiver apparatus 100 to the management center apparatus 80 via the gateway apparatus 40. At this time, the apparatus management information (AMI) is transmitted while being divided to a plurality of packets. The management center apparatus 80 transmits an acknowledgement signal (ACK) for notifying the satellite digital broadcasting receiver apparatus 100 of receiving of the apparatus management information (AMI) to the satellite digital broadcasting receiver apparatus 100 via the gateway apparatus 40 whenever the management center apparatus 80 receives each of the divided packets. The acknowledgement signal (ACK) stores therein data of "06H". Further, an end-of-text (EOT) signal that represents end of transmission is transmitted from the satellite digital broadcasting receiver apparatus 100 to the management center apparatus 80 via the gateway apparatus 40. The end-of-text (EOT) signal stores therein data of "04H". In response to this, the management center apparatus 80 transmits an acknowledgement signal (ACK) to the satellite digital broadcasting receiver apparatus 100 via the gateway apparatus 40.

By the way, when data is transmitted using the UDP header 201, data error or data missing or loss sometimes occurs until the data arrives at the gateway apparatus 40 since the transmission is of best-effort type. Due to this, the controller 10 exercises the following control. The satellite digital broadcasting receiver apparatus 100 uploads the apparatus management information, and transmits data of the next block serial number after receiving the acknowledgement signal (ACK), or a time interval from a timing when the satellite digital broadcasting receiver apparatus 100 transmits the inquiry signal (ENQ) or the apparatus management information (AMI) to a timing when the satellite digital broadcasting receiver apparatus 100 receives the acknowledgment signal (ACK) is monitored using a timer or the like, and the satellite digital broadcasting receiver apparatus 100 retransmits the apparatus management information (AMI) when ten seconds or more pass. Preferably, the satellite digital broadcasting receiver apparatus 100 retransmits the apparatus management information (AMI) is up to three times, and the line connection is temporarily disconnected when the number of times of the retransmission exceeds three.

Further, the apparatus control information is downloaded as follows in a manner similar to above. A packet including the apparatus control information to which the UDP header, the IP header, and the RTP header are added as shown in Fig. 7(a) (it is noted that the apparatus control information is stored in place of the apparatus management information (AMI) in Fig. 7(a)) is transmitted from the management center apparatus 80 to the satellite digital broadcasting receiver apparatus 100. In response to this, when the satellite digital broadcasting receiver apparatus 100 receives the packet, the satellite digital broadcasting receiver apparatus 100 transmits an acknowledgment signal (ACK) to the management center apparatus 80. In a manner similar to that of the above sequence, the controller 10 of the satellite digital broadcasting receiver apparatus 100 monitors whether the satellite digital broadcasting receiver apparatus 100 receives the apparatus control information using the timer. When the satellite digital broadcasting receiver apparatus 100 cannot receive the apparatus control information even after passage of ten seconds or more, the satellite digital broadcasting receiver apparatus 100 issues a retransmission request to the management center apparatus 80 by transmitting a negative acknowledgement signal (NAQ (15H)) to the management center apparatus 80. When the satellite digital broadcasting receiver apparatus 100 cannot receive the data even after transmitting the negative acknowledgment signal (NAQ) to the management center apparatus 80 three times, the line connection is temporarily disconnected.

Fig. 10 shows a conversion method for converting the telephone number of the access point communication apparatus 70 for connecting the satellite digital broadcasting receiver apparatus 100 to the management center apparatus 80 into an IP address of the gateway apparatus 40, according to a first modified preferred embodiment of the first preferred embodiment. Fig. 11 shows examples of IP address conversion tables 32A stored in, for example, the management table memory 32 of the call control server apparatus 30 shown in Fig.3 and using the conversion method shown in Fig. 10. Fig. 11(a) shows one example of an area code-to-IP address conversion table 32A-1, Fig. 11(b) shows one example of a local code-to-IP address conversion table 32A-2, Fig. 11(c) shows one example of a higher-order number of subscriber's number-to-IP address conversion table 32A-3, and Fig. 11(d) shows one example of a lower-order number of subscriber's number-to-IP address conversion table 32A-4.

As shown in Fig. 11, the destination IP address of the gateway apparatus 40 can be obtained from telephone number information using the management tables 32A (stored in, for example, the management table memory 31 of the call control server apparatus 30) each of which shows a correspondence between an area code, a local code, a higher-order number, which is two higher figures, of a subscriber's number, or a lower-order number, which is two lower figures, of the subscriber's number and an IP address. In the example of Fig. 10, a destination IP address 111.211.31.41 is obtained from a telephone number ABC-DEF-GHJK. These management tables 31A are stored in, for example, the management table memory 31 of the call control server apparatus 30. The satellite digital broadcasting receiver apparatus 100 transmits an inquiry to the call control server apparatus 30, receives a response from the apparatus 30, and can acquire the destination IP address of the gateway apparatus 40.

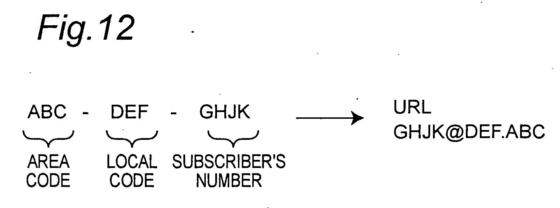

Fig. 12 shows a conversion method for converting the telephone number of the access point communication apparatus 70 for connecting the satellite digital broadcasting receiver apparatus 100 to the management center apparatus 80 into the URL of the gateway apparatus 40, according to a second modified preferred embodiment of the first preferred embodiment. As shown in Fig. 12, a subscriber's number is arranged in front of @ mark, an area code and a local code are aligned in rear of the @ mark with a dot put between the area code and the local code to indicate a domain name, thereby obtaining the URL. In the example of Fig. 12, a destination URL of GHJK@DEF.ABC is obtained from a telephone number ABC-DEF-GHJK.

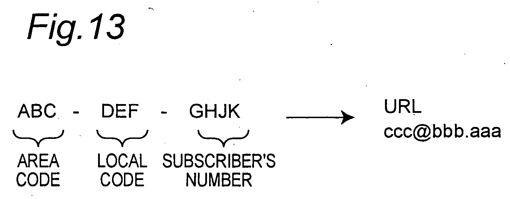

Fig. 13 shows a conversion method for converting the telephone number of the access point communication apparatus 70 for connecting the satellite digital broadcasting receiver apparatus 100 to the management center apparatus 80 into the URL of the gateway apparatus 40, according to a third modified preferred embodiment of the first preferred embodiment. As shown in Fig. 13, a subscriber's number is arranged in front of @ mark, an area code and a local code are aligned in rear of the @ mark with a dot put between the area code and the local code to indicate a domain name; thereby obtaining the URL. In the example of Fig. 13, a destination URL of ccc@bbb.aaa is obtained from a telephone number ABC-DEF-GHJK.

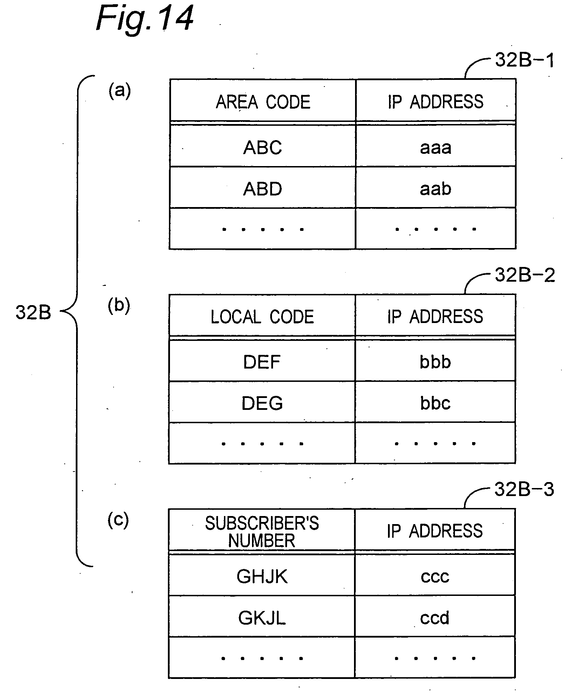

The conversion method shown in Fig. 13 can be executed by the controller 10 itself of the satellite digital broadcasting receiver apparatus 100. Alternatively, management tables 32b shown in Fig. 14 and using the conversion method shown in Fig. 13 may be stored in, for example, the memory of the controller 10 or the other server apparatus such as the call control server apparatus 30, and the URL may be obtained using inquiry procedures similar to those shown in Fig. 6.

Fig. 14 shows examples IP address conversion tables 32B stored in, for example, the management table memory 32 of the call control server apparatus 30 shown in Fig. 3 and using the conversion method shown in Fig. 13. Fig. 14(a) shows one example of an area code-to-IP address conversion table 32B-1, Fig. 14(b) shows one example of a local code-to-IP address conversion table 32B-2, and Fig. 14(c) shows one example of a subscriber's number-to-IP address conversion table 32B-3. In the example of Fig. 14, the telephone number is divided to an area code, a local code, and a subscriber number, and the URL or the IP address can be obtained from the telephone number.

As described so far, according to the present preferred embodiment, the IP network can be used for the connection of the satellite digital broadcasting receiver apparatus 100 to the management center apparatus 80 so as to transmit and receive the apparatus management information and the apparatus control information. As compared with the conventional techniques, a communication rate required for the transmission and receiving of the apparatus management information and the apparatus control information can be remarkably reduced.

Further, according to the present preferred embodiment, the IP network is used for the connection of the satellite digital broadcasting receiver apparatus to the management center apparatus, the inquiry is transmitted to the server apparatus such as the call control server apparatus 30, and the URL or the IP address of the gateway apparatus 40 is obtained or the controller 10 itself of the satellite digital broadcasting receiver apparatus 100 can generate the URL or the IP address. Accordingly, the satellite digital broadcasting receiver apparatus 100 can automatically establish a communication and a connection to the management center apparatus 80, and this leads to that the transmission and receiving of the apparatus management information and the apparatus control information can be executed quite simply.

Moreover, according to the present preferred embodiment, the IP network is used for the connection of the satellite digital broadcasting receiver apparatus 100 to the management center apparatus 80, the apparatus management information is transmitted while being divided to a plurality of packets, and the satellite digital broadcasting receiver apparatus 100 transmits the next packet in response to the acknowledgment signal from the management center apparatus 80. Therefore, it is possible to ensure that the satellite digital broadcasting receiver apparatus 100 transmits and receives the apparatus management information and the apparatus control information to and from the management center apparatus 80.

In the above-mentioned preferred embodiment, the VoIP interface circuit 16 is directly connected to the IP network 50. However, the present invention is not limited to this, and the VoIP interface circuit 16 may be connected to the IP network 50 via a router apparatus or a radio LAN apparatus.

### SECOND PREFERRED EMBODIMENT

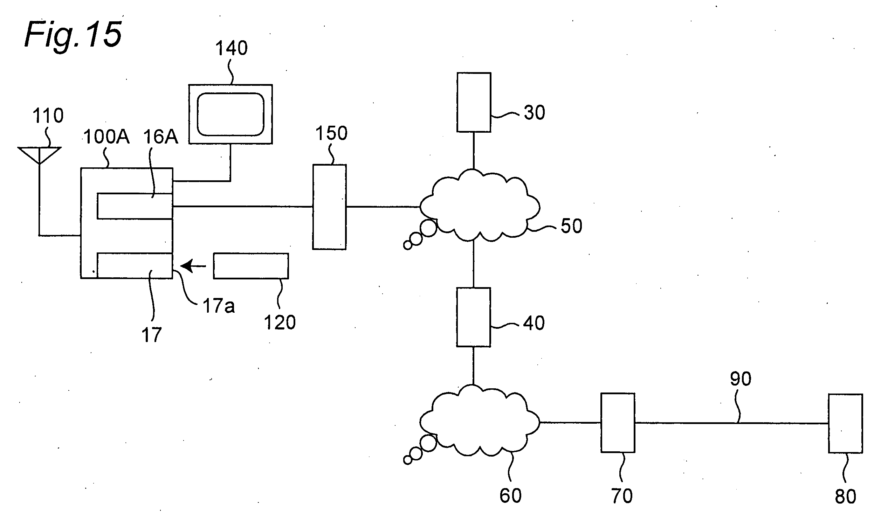

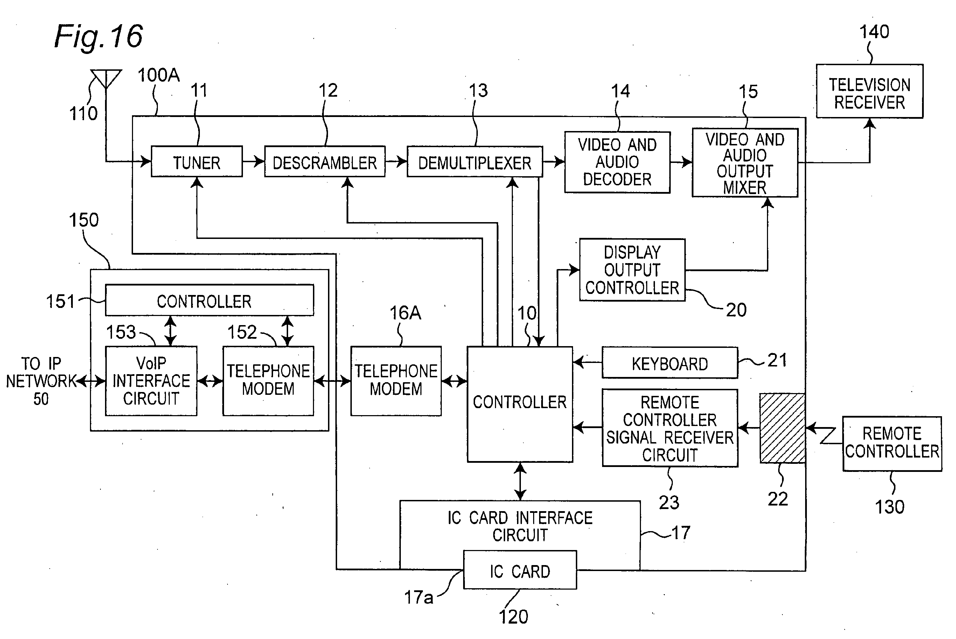

Fig. 15 is a block diagram showing a configuration of a communication system between a satellite digital broadcasting receiver apparatus 100A according to a second preferred embodiment of the present invention and a management center apparatus 80. Fig. 16 is a block diagram showing a detailed configuration of the satellite digital broadcasting receiver apparatus 100A shown in Fig. 15.

The communication system according to the second preferred embodiment is characterized, as compared with the communication system shown in Fig. 1, by inserting a VoIP adapter apparatus 150 between the satellite digital broadcasting receiver apparatus 100A and an IP network 50. In other words, as shown in Fig. 16, the satellite digital broadcasting receiver apparatus 100A includes a telephone modem 16A for transmission and receiving of apparatus management information and apparatus control information. Only the VoIP adapter apparatus 150 is added to the communication system so that the existing satellite digital broadcasting receiver apparatus 100A that does not includes the VoIP interface circuit 16 shown in Fig. 2 transmits and receives the apparatus management information and the apparatus control information via the IP network 50 using a VoIP packet signal through VoIP communication procedures. Since the other constituent sections of the satellite digital broadcasting receiver apparatus 100A are equal to those of the satellite digital broadcasting receiver apparatus 100 shown in Fig. 1, they will not be described herein in detail. The telephone modem 16A is a communication circuit for transmitting and receiving the above-mentioned various types of signals using a telephone network interface in place of the VoIP interface circuit 16 shown in Fig. 2.

Referring to Fig. 15, the VoIP adapter apparatus 150 is constituted so as to include a controller 151 that controls entirety of the VoIP adapter apparatus 150, a telephone modem 152 for holding a telephone data communication with the telephone modem 16A of the satellite digital broadcasting receiver apparatus 100A, and a VoIP interface circuit 153 for holding an IP communication with a gateway apparatus 40 via the IP network 50 using an Internet protocol, for example, SIP communication procedures or ITU-T recommendation H.323.

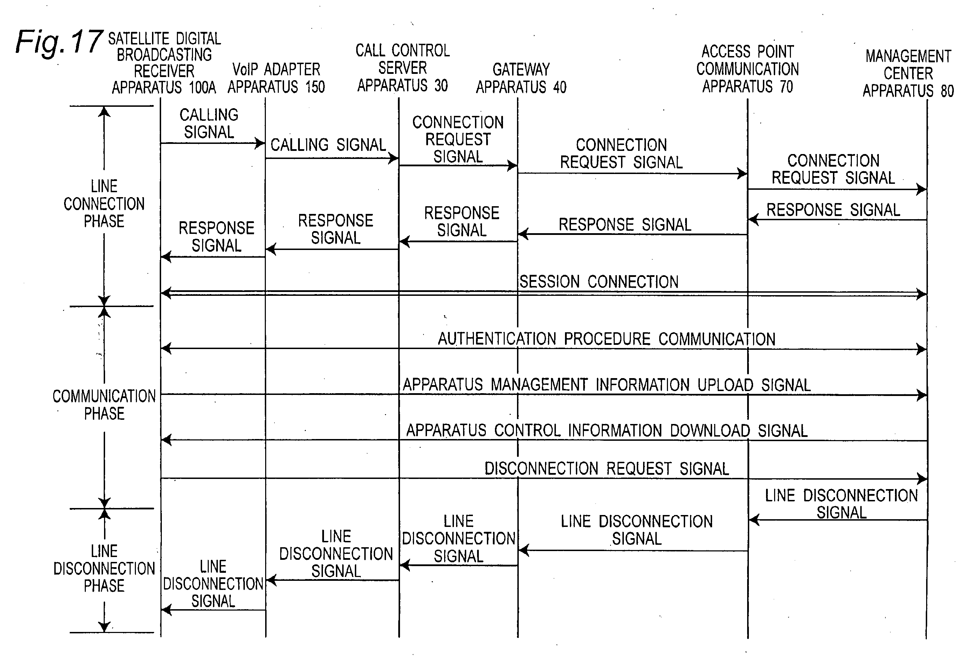

Fig. 17 is a sequence diagram showing a communication sequence showing a communication between the satellite digital broadcasting receiver apparatus 100A and the management center apparatus 80 in the communication system shown in Fig. 15. As is apparent from comparison with the communication sequence shown in Fig. 8, the communication sequence shown in Fig. 17 is executed in a manner similar to that shown in Fig. 8 except that the respective packet signals are relayed by the VoIP adapter apparatus 150 by inserting the VoIP adapter apparatus 150. In other words, the VoIP interface circuit 153 transmits data that includes the apparatus management information and that is received from the controller 10 of the satellite digital broadcasting receiver apparatus 100A via the telephone modem 16A and the telephone modem 152, to the management center apparatus 80 via the IP network 50, the gateway apparatus 40, and the access point communication apparatus 70 using the VoIP packet signal. In addition, the VoIP interface circuit 153 receives data that includes the apparatus control information from the management center apparatus 80 via the access point communication apparatus 70, the gateway apparatus 40, and the IP network 50 using the VoIP packet signal, and outputs the received data to the controller 10 of the satellite digital broadcasting receiver apparatus 100A via the telephone modem 152 and the telephone modem 16A.

As mentioned so far, according to the present preferred embodiment, the VoIP adapter apparatus 150 connected to the existing satellite digital broadcasting receiver apparatus 100A is provided. Therefore, the IP network can be used for connection of the satellite digital broadcasting receiver apparatus to the management center apparatus simply using the existing satellite digital broadcasting receiver apparatus 100A. Therefore, as compared with the conventional techniques, a communication rate required for the transmission and receiving of the apparatus management information and the apparatus control information can be remarkably reduced.

### THIRD PREFERRED EMBODIMENT

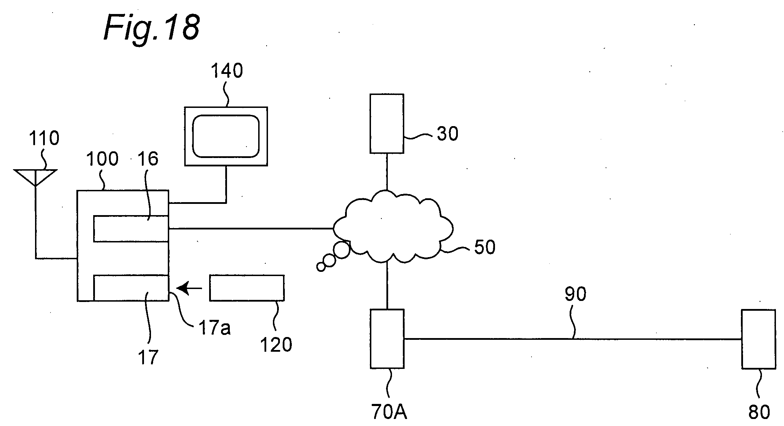

Fig. 18 is a block diagram showing a configuration of a communication system between a satellite digital broadcasting receiver apparatus 100 according to a third preferred embodiment of the present invention and a management center apparatus 80.

The communication system according to the third preferred embodiment is characterized, as compared with the communication system shown in Fig. 1, in that the public switched telephone network 60 is not used, and in that an access point communication apparatus 70A connected to an IP network 50 is allowed to include the function of a gateway apparatus 40. This difference will be described hereinafter in detail.

According to the present preferred embodiment, a destination recorded in an IC card 120 is not a telephone number of the access point communication apparatus 70A but a URL or an IP address of the access point communication apparatus 70A. A VoIP interface circuit 16 is characterized by accessing the access point communication apparatus 70A via the IP network 50 and a call control server apparatus 30 using the URL or IP address of the access point communication apparatus 70A, and by transmitting and receiving data such as apparatus management information and apparatus control information using a VoIP packet signal. Further, the VoIP interface circuit 16 relays various data signals communicated between the satellite digital broadcasting receiver apparatus 100 and the management center apparatus 80 while executing a conversion processing to a communication signal and communication procedures for a communication between the access point communication apparatus 70A, IP network 50 and the management center apparatus 80. In this case, as a signal format of the packet signal transmitted and received on the IP network 50, a signal format obtained by deleting the pieces of data 211, 212, 213, 215, and 216 from that shown in Fig. 7(b) is used.

The communication system constituted as mentioned above exhibits the functions and advantageous effects similar to those of the first preferred embodiment, and also exhibits such a unique advantageous effect that the system configuration is quite simplified as compared with that of the first preferred embodiment shown in Fig. 1.

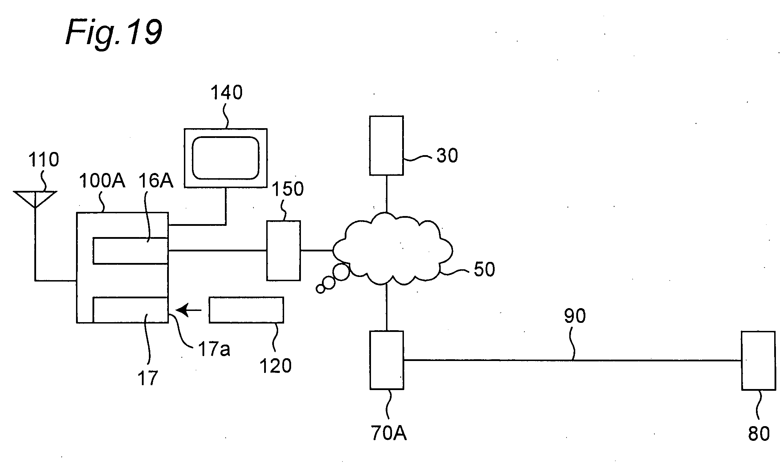

As shown in Fig. 19, the communication system may be constituted so that the satellite digital broadcasting receiver apparatus 100 shown in Fig. 18 is replaced by the satellite digital broadcasting receiver apparatus 100A shown in Fig. 15, and so that the VoIP adapter apparatus 150 is inserted between the telephone modem 16A of the satellite digital broadcasting receiver apparatus 100A and the IP network 50 (referred to as "a modified preferred embodiment of the third preferred embodiment" hereinafter).

Further, the telephone number, the URL, and the IP address of the access point communication apparatus 70A are all recorded in an IC card 120. Depending on whether the communication system is constituted according to the third preferred embodiment shown in Fig. 18 or according to the modified preferred embodiment of the third embodiment, the controller 10 may select appropriate information, i.e., one of the telephone number, the URL, and the IP address of the access point communication apparatus 70A.

The satellite digital broadcasting receiver apparatus 100 or 100A disclosed in the present preferred embodiment is applicable not only to the satellite digital broadcasting receiver apparatus in Japan but also to the overseas satellite digital broadcasting receiver apparatus.

In the above-mentioned preferred embodiment, the UDP header 201, the IP header 202, and the RTP header 203 are added to the data 204, thereby constituting the VoIP packet signal as shown in Fig. 7. However, the present invention is not limited to this. The VoIP packet signal may be constituted by adding a TCP header and the IP header 202 to the data 204.

In the above-mentioned preferred embodiment, the instance of establishing a link to the access point communication apparatus 70 by allowing the satellite digital broadcasting receiver apparatus 100 to call out and the call control protocol is used for the communication between the satellite digital broadcasting receiver apparatus 100 and the access point communication apparatus 70 has been shown. However, the present invention is not limited to this, and AMI data may be transmitted using HTTP. In that case, in a communication sequence, the line connection phase and the line disconnection phase shown in Fig. 8 or 17 are eliminated and only the communication phase using the HTTP is used.

### APPLICABLIBILITY OF INDUSTIRAL UTILIZATION

As mentioned so far in detail, according to the satellite digital broadcasting receiver apparatus of the present invention, in the satellite digital broadcasting receiver apparatus including a communication circuit that transmits and receives apparatus management information and apparatus control information required for viewing a satellite digital broadcasting program to and from a management center apparatus that manages the apparatus management information and the apparatus control information, the communication circuit includes a VoIP interface circuit that is connected to an IP (Internet Protocol) network, that transmits data including the apparatus management information to the management center apparatus via the IP network and an access point communication apparatus using a VoIP (Voice over Internet Protocol) packet signal. Further, the VoIP interface circuit receives data including the apparatus control information from the management center apparatus via the access point communication apparatus and the IP network using the VoIP packet signal. Since the IP network can be used for connection of the satellite digital broadcasting receiver apparatus to the management center apparatus so as to transmit and receive the apparatus management information and the apparatus control information, a communication rate required for transmission and receiving of the apparatus management information and the apparatus control information can be remarkably reduced as compared with that of the conventional techniques.

## Claims

1. A satellite digital broadcasting receiver apparatus comprising a communication circuit for transmission and receive of apparatus management information and apparatus control information required for viewing a satellite digital broadcasting program to and from a management center apparatus for managing the apparatus management information and the apparatus control information,
wherein said communication circuit comprises a VoIP interface circuit connected to an IP (Internet Protocol) network,
wherein said VoIP interface circuit transmits data including the apparatus management information to said management center apparatus via said IP network and an access point communication apparatus using a VoIP (Voice over Internet Protocol) packet signal, and
wherein said VoIP interface circuit receives data including the apparatus control information from said management center apparatus via said access point communication apparatus, said public switched telephone network, said gateway apparatus, and said IP network using the VoIP packet signal.

2. The satellite digital broadcasting receiver apparatus as claimed in claim 1,
wherein said VoIP interface circuit transmits the data including the apparatus management information to said management center apparatus via said IP network, the gateway apparatus, the public switched telephone network, and said access point communication apparatus, and
wherein said VoIP interface circuit receives the data including the apparatus control information from said management center apparatus via said access point communication apparatus, said public switched telephone network, said gateway apparatus, and said IP network.

3. The satellite digital broadcasting receiver apparatus as claimed in claim 1 or 2,
wherein said VoIP packet signal is constituted so that an IP header, a UDP header, and an RTP header are added to data of the apparatus management information or the apparatus control information.

4. The satellite digital broadcasting receiver apparatus as claimed in any one of claims 1 to 3, further comprising:
a storage device that stores a telephone number of said access point communication apparatus; and
control means for generating an address of said gateway apparatus from said telephone number,
wherein said VoIP interface circuit transmits the VoIP packet signal including the data including said apparatus management information to said gateway apparatus via said IP network using said generated address as a destination address.

5. The satellite digital broadcasting receiver apparatus as claimed in any one of claims 1 to 3, further comprising:
a storage device that stores a telephone number of said access point communication apparatus; and
control means for transmitting an inquiry signal including said telephone number to a predetermined server apparatus, and for receiving an address of said gateway apparatus transmitted in response to the inquiry signal,
wherein said VoIP interface circuit transmits the VoIP packet signal including the data including said apparatus management information to said gateway apparatus via said IP network using said received address as a destination address.

6. The satellite digital broadcasting receiver apparatus as claimed in any one of claims 1 to 5,
wherein said VoIP interface circuit divides the data including said apparatus management information to a plurality of VoIP packets, transmits the plurality of VoIP packets, and transmits a next VoIP packet signal in response to an acknowledgment signal from said management center apparatus.

7. A VoIP adapter apparatus for use in a satellite digital broadcasting receiver apparatus comprising a communication circuit that transmits and receives apparatus management information and apparatus control information required for viewing a satellite digital broadcasting program to and from a management center apparatus for managing the apparatus management information and the apparatus control information, said VoIP adapter apparatus comprising:
a telephone modem connected to said communication circuit; and
a VoIP interface circuit connected to said telephone modem and an IP (Internet Protocol) network,
wherein said VoIP interface circuit transmits data, that includes the apparatus management information and that is received from said communication circuit via said telephone modem to said management center apparatus via said IP network and an access point communication apparatus, using a VoIP (Voice over Internet Protocol) packet signal,
wherein said VoIP interface circuit receives data including the apparatus control information from said management center apparatus via said access point communication apparatus and said IP network using the VoIP packet signal, and outputs the data to the communication circuit via the telephone modem.

8. The VoIP adapter apparatus as claimed in claim 7,
wherein said VoIP interface circuit transmits the data including the apparatus management information to said management center apparatus via said IP network, a gateway apparatus, a public switched telephone network, and said access point communication apparatus, and
wherein said VoIP interface circuit receives the data including the apparatus control information from said management center apparatus via said access point communication apparatus, said public switched telephone network, said gateway apparatus, and said IP network.

9. The VoIP adapter apparatus as claimed in claim 7 or 8,
wherein said VoIP packet signal is constituted so that an IP header, a UDP header, and an RTP header are added to data of the apparatus management information or the apparatus control information.
